# EUROPÄISCHE PATENTSCHRIFT

(11) **EP 2 441 717 B1**
(45) Veröffentlichungstag und Bekanntmachung des Hinweises auf die Patenterteilung: **17.01.2018**
(21) Anmeldenummer: 11184386.8
(22) Anmeldetag: 07.10.2011
(51) Int. Cl.: B65H 29/00, B65H 43/08, B65H 43/00

(54) **Verfahren zum Betrieb einer Transportvorrichtung sowie Transportvorrichtung zur Durchführung des Verfahrens**
Method for operating a transport device and transport device for implementing the method
Procédé de fonctionnement d'un dispositif de transport ainsi que dispositif de transport pour la mise en oeuvre du procédé

(30) Priorität: 13.10.2010 CH 16722010
(43) Veröffentlichungstag der Anmeldung: 18.04.2012
(73) Patentinhaber: Ferag AG, 8340 Hinwil (CH)
(72) Erfinder: Keller, Roland, 8606 Greifensee (CH)
(74) Vertreter: Rentsch Partner AG

(56) Entgegenhaltungen:
- US-A- 5 884 747
- US-A1- 2005 061 621

## Beschreibung

### TECHNISCHES GEBIET

Die vorliegende Erfindung bezieht sich auf das Gebiet der Transporttechnik, insbesondere im Bereich der Druckweiterverarbeitung. Sie betrifft ein Verfahren zum Betrieb einer Transportvorrichtung sowie eine Transportvorrichtung zur Durchführung des Verfahrens.

### STAND DER TECHNIK

Im Bereich der Druckweiterverarbeitung, in dem Druckerzeugnisse, die aus einer Druckmaschine kommen, durch Sammeln, Falzen, Einstecken, Heften oder dergleichen zu einem fertigen Druckprodukt, einer Zeitung, einer Broschüre oder dergleichen, weiterverarbeitet werden, werden, wenn es um hohe Verarbeitungsleistungen von zum Beispiel mehreren 10.000 Produkten pro Stunde geht, spezielle Transportvorrichtungen wie die bekannten Greifertransporteure, eingesetzt, um die anfallenden grossen Produktmengen in kurzer Zeit zwischen verschiedenen Weiterverarbeitungsstationen transportieren zu können.

Die verschiedenen Weiterverarbeitungsstationen bilden zusammen mit den zugehörigen Transportvorrichtungen Verarbeitungslinien, auf denen die Produkte vorgegebenen Verarbeitungsschritten unterworfen werden. Um die Flexibilität der Weiterverarbeitung zu erhöhen, werden zunehmend Verarbeitungslinien geschaffen, auf denen die durchlaufenden Produkte wahlweise unterschiedlichen Verarbeitungsschritten zugeführt werden können. So ist es beispielsweise möglich, bei einer Transportvorrichtung mit geschlossenem Umlauf ausgewählte Produkte mehrfach umlaufen zu lassen, um sie mehrfach demselben Verarbeitungsschritt (Einstecken oder dergleichen) zuzuführen.

Damit eine solche flexible Arbeitsweise mit der notwendigen Fehlerfreiheit durchgeführt werden kann, muss der Ort der einzelnen Produkte innerhalb der Transportvorrichtung mit Eindeutigkeit verfolgt werden können. Wenn sich beispielsweise in einem Greifertransporteur ein Produkt, das von einer Verarbeitungsstation bearbeitet werden soll, in einem bestimmten Greifer des Transporteurs befindet, muss die Verarbeitungsstation wissen, wann sich dieser Greifer in ihrem Zugriffsbereich befindet, damit sie auf den richtigen Greifer zugreifen kann.

Ab einer bestimmten Länge der Transportvorrichtung, respektive ab einer bestimmten Anzahl von Greifern im Greifertransporteur, wird durch das Spiel zwischen den einzelnen mechanischen Gliedern im Transporteur eine zusätzliche Fehlerquelle hinsichtlich der Positionsverfolgung der Produkte innerhalb der Transportvorrichtung eingeführt. Das Spiel zwischen den einzelnen Gliedern summiert sich, so dass beim Anfahren und Abbremsen die tatsächlichen Abstände zwischen den Gliedern verändern. Bei Gliedern, die zum Beispiel in einer Kette weit voneinander entfernt angeordnet sind, kann dieser Effekt - auch "Jitter" genannt - dazu führen, dass die relative Position der Glieder nicht mehr eindeutig bestimmt werden kann. Sogar bei bekannter Position einzelner Glieder kann in Folge des "Jitter" nicht genau auf die Position weit entfernter Glieder geschlossen werden.

Des weiteren ist es wichtig, bei einem Unterbruch in der Transportvorrichtung nach dem erneuten Anlaufen der Anlage schnell und sicher erkennen zu können, wo sich die einzelnen Produkte beziehungsweise Greifer gerade befinden, damit das vorgegebene Verarbeitungsprogramm fehlerfrei weitergeführt werden kann.

Aus der WO 2008/043194 A2 ist es bekannt, flexible, flächige Produkte, vorzugsweise Druckprodukte, die in einem konventionellen Hochleistungs-Druckverfahren hergestellt wurden, zwischen der Hochleistungs-Druckvorrichtung und einer ersten, der Druckvorrichtung nachgeschalteten Weiterverarbeitungsvorrichtung mit einem Identifikationsmittel in Form eines RFID-Tags versehen. Hierbei brauchen die RFID-Tags nicht direkt im oder am Druckprodukt angebracht zu sein, sondern können dem Druckprodukt auch lösbar, temporär räumlich unmittelbar zugeordnet werden. Die Identifikationsmittel können hierbei zum Beispiel in einer dem Druckprodukt für eine bestimmte Dauer und einen bestimmten Abschnitt des Transportpfades zugeordneten Transporteinheit, zum Beispiel einer Auflage eines Leiterförderers oder einem Greifer eines Greifertransporteurs, ausgebildet sein. Eine solche temporäre Identifizierbarkeit eines Greifers bleibt jedoch produktbezogen und schafft daher keine dauerhafte und eindeutige Identifizierbarkeit der Transportmittel insgesamt.

Aus der WO 2008/144945 A2 ist es bekannt, an den Klammem eines Greifertransporteurs berührungslos ein- und/oder auslesbare Tags vorzusehen, und zum Ein- und/oder Auslesen vorgegebener Datenmengen in den Tags einem Greifer eine Ein/Auslesevorrichtung in die Nähe des jeweiligen Greifers zu bringen und über einen ausgewählten Abschnitt des Transportweges mit dem jeweiligen Greifer mitzubewegen. Hierdurch wird es trotz der hohen Lineargeschwindigkeiten der Greifer während des Betriebs möglich, nicht nur den Greifer eindeutig zu identifizieren, sondern auch seine Vorgeschichte, Betriebsdaten und seinen teilweisen oder vollständigen Ausfall jederzeit festzustellen und zu dokumentieren. So kann einerseits sichergestellt werden, dass bei einer Reparatur des Greifers nach einem Ausfall die richtigen Ersatzteile eingebaut werden. Weiterhin kann bei einer Störung sofort der Greifer identifiziert werden, der den Unterbruch verursacht hat und nach einer Reparatur die Anlage dort wieder angefahren werden, wo sie stehen geblieben ist. Schliesslich kann die Individualisierung der Greifer mit Vorteil zur Steuerung der Anlage eingesetzt werden, wenn beispielsweise bestimmte Greifer mit bestimmten Produkten aus der fortlaufenden Reihe der Greifer abgezweigt (ausgeschleust) und separaten Bearbeitungsvorgängen zugeführt werden sollen. In diesem Fall wird die Identität der Greifer fortlaufend überprüft und der Abzweigvorgang eingeleitet, wenn der gesuchte Greifer am Abzweigpunkt angelangt ist. Entsprechend kann der abgezweigte Greifer mit dem separat bearbeiteten Produkt später wieder an vorbestimmter Stelle in den Produktestrom eingefügt (eingeschleust) werden. Bevorzugt werden dazu als Tags funktechnisch ein- und/oder auslesbare Tags, insbesondere in Form von RFIDs, verwendet. Diese Art der Individualisierung der Greifer durch Ausstattung jedes Greifers mit einem individuellen Merkmal in Form eines lesbaren Etiketts ist vergleichsweise aufwändig, weil hier jeder einzelne Greifer speziell behandelt werden muss.

In der EP 0 961 188 A1 wird ein Verfahren zum Steuern von Förderung und Bearbeitung von Stückgut aufgezeigt, das steuerungstechnisch einfach und vorrichtungsmässig wenig aufwändig ist, derart, dass es sich sowohl für Systeme mit Förderketten mit beliebiger Länge als auch für Systeme mit mehr oder weniger voneinander unabhängigen Haltemitteln (z.B. Greifer eines Greifertransporteurs) anwendbar ist, und zwar bei Einsatz von verschiedensten Stationen an frei wählbaren Stellen des Förderweges für Aktionen, die sich auf jeden zugeförderten Gegenstand bzw. Haltemittel oder nur auf eine vorbestimmte Auswahl von Gegenständen bzw. Haltemitteln beziehen. Zusätzlich soll bei Verwendung des Verfahrens der Aufwand für die Inbetriebnahme, für einen Kaltstart, für eine statistische Überwachung des Haltemittelzustandes und für Unterhaltsarbeiten, in denen Haltemittel ersetzt werden, minimal sein.

Hierzu ist eine Mehrzahl der auf einem in sich geschlossenen Förderweg verfahrbaren Haltemittel als Signalgeber ausgerüstet. Jede Station weist sensorische Mittel zur Generierung eines Signals bei der Durchförderung eines Signalgebers auf. Ferner weisen die Stationen einen stationsinternen Taktgeber oder ein sensorisches Mittel zur Erkennung von zugeförderten Haltemitteln auf, sowie einen Zähler zum Zählen der Takte des Taktgebers bzw. zum Zählen der durchgeförderten Haltemittel.

Durch ein von einem Signalgeber in einer Station erzeugtes Signal wird in der Station der Zähler zurückgesetzt und wird gegebenenfalls eine Phasenverschiebung zwischen Stationstakt und Fördertakt erfasst oder auf Null gesetzt. Zwischen je zwei Signalgebern ist eine Anzahl von nicht als Signalgeber ausgerüsteten Haltemitteln vorgesehen, welche Anzahl für jedes Signalgeberpaar verschieden ist. Durch die Zahl von Haltemitteln zwischen einem ersten, flussabwärts angeordneten und einem zweiten flussaufwärts angeordneten Signalgeber, welche Zahl als Stationstakte oder als sensorisch erfasste Haltemittel gezählt und erfasst wird, ist der zweite Signalgeber eindeutig identifizierbar (Signalgeber-Identifikation). Durch den momentanen Zählerstand und die Signalgeber-Identifikation des vorangehenden Signalgebers ist jedes Haltemittel, das momentan durch einen Referenzpunkt der Station gefördert wird, eindeutig identifizierbar. Wesentlich für den Erfolg dieses Verfahrens ist die ungleiche Segmentierung des Förderweges durch die Signalgeberpaare, die paarweise einen unterschiedlichen Abstand aufweisen müssen. Es ist jedoch mit organisatorischem Aufwand verbunden, diese unterschiedlichen Abstände einzuhalten.
Die DE 696 17 400 T2 offenbart ein Verfahren zum Identifizieren und Auffinden eines Greifers beim Transport von Druckerzeugnissen mit Hilfe eines Greiferförderers, wobei der Greiferförderer in eine Anzahl von Greiferabschnitten unterteilt wird, und wobei die Greiferabschnitte ausreichend kurz gemacht werden, um störende Längenänderungen der betreffenden Abschnitte im Betrieb zu vermeiden. Das Vorsehen eines eigentümlichen Identifizierungscodes für jeden Abschnitt ermöglicht es, dass der Abschnitt und der Beginn des genannten Abschnittes identifiziert werden können. Durch Zuteilen einer eigentümlichen Identität an den Greifer aufgrund seiner Zugehörigkeit zu seinem Abschnitt und aufgrund seiner Position in diesem wird es möglich, dass der Greifer durch Abfühlen des Abschnittscodes und der Adresse des Greifers innerhalb seines speziellen Abschnittes sicher aufgefunden werden kann. Eine vereinfachte durchgehende Nummerierung der Greifer bzw. Klammern über die gesamte Förderstrecke ist mit dieser Technik allerdings nicht möglich.

Aus der US 5884747 A ist ein Verfahren zum Identifizieren und Auffinden eines Greifers beim Transport von Druckerzeugnissen mit Hilfe eines Greiferförderers bekannt, bei dem durch Unterteilen des Greiferförderers in eine Anzahl von ausreichend kurzen Greiferabschnitten störende Längenänderungen der betreffenden Abschnitte im Betrieb vermieden werden sollen. Für jeden einzelnen Abschnitt ist ein individueller Identifizierungscode vorgesehen, der es ermöglichen soll, dass der Abschnitt und der Beginn des genannten Abschnittes identifiziert werden können. Jedem Greifer wird eine eindeutigen Identität zugeordnet, so dass er aufgrund seiner Zugehörigkeit zu seinem Abschnitt und aufgrund seiner Position in diesem, durch Abfühlen des Abschnittscodes und der Adresse des Greifers innerhalb seines speziellen Abschnittes, sicher aufgefunden werden kann.
Aus der US 2005/061621 A1 ist eine Vorrichtung zum Verarbeiten von Schlachttieren oder Teilen derselben, beispielsweise von Geflügel, bekannt, die ein Transportsystem aufweist, das eine Endlosbahn und eine Kette aus Kettenelementen zum Tragen eines oder mehrerer Schlachttiere und/oder Teile derselben umfasst. Des Weiteren sind eine Antriebseinrichtung zum Bewegen der Kette entlang einer Bahn in einer Transportrichtung und eine Übergabestation zum Übergeben der Schlachttiere oder Teilen derselben an die Träger ebenso Teil der Vorrichtung, wie eine oder mehrere Bearbeitungsstationen und eine Abgabestation zum Abgeben der Schlachttiere oder Teile derselben von den Trägern. Mit Hilfe einer Positioniereinrichtung wird die Position der Kette in Bezug auf die Bahn bestimmt, wobei die Positioniereinrichtung ein identifizierbare Kettenelemente mit Identifizierungsmarkierungen und einen umfasst, der an der Bahn eingerichtet ist, um jedes identifizierbare Kettenelement zu erfassen. Die anderen Kettenelemente in der Kette sind als nicht identifizierbare aber zählbare Kettenelemente ausgeführt. Mittels einer unmittelbar nach dem Identifizierungssensor angeordneten Zählstation werden nach dem Passieren eines identifizierbaren Kettenelementes die nicht identifizierbaren aber zählbaren Kettenelemente gezählt. In einer elektronischen Speichereinrichtung mit einer Speichertabelle (t) wird für jeden Träger in einem Speicherfeld eine Variable aufgezeichnet, die die Anzahl der durch die Zählvorrichtung seit dem Passieren des stromauf befindlichen identifizierbaren Kettenelementes gezählten Träger darstellt. Entlang der Kette sind eine Vielzahl identifizierbarer Gruppen vorhanden zwischen denen nicht identifizierbare Gruppen angeordnet sind. Gemäss einer bevorzugten Ausführungsform ist jedem identifizierbaren Element ein eindeutiges Identifikationsmerkmal zugeordnet, so dass die Kettenposition allein anhand eines identifizierbaren Elements festgestellt werden kann. Gemäss einer weiteren bevorzugten Variante bilden ein identifizierbares Element und eine innerhalb der Kette einmalige Anzahl von nicht identifizierbaren, aber zählbaren Elementen, eine eindeutig identifizierbare Gruppe innerhalb der Kette, so dass die genaue Kettenposition anhand dieser Gruppe festgestellt werden kann.

### DARSTELLUNG DER ERFINDUNG

Es ist eine Aufgabe der Erfindung, ein gattungsgemässes Verfahren dahingehend zu verbessern, dass auf einfache und sichere Weise und insbesondere bei verringertem Aufwand an den Transportmitteln bzw. der Transportvorrichtung eine eindeutige Identifizierung der einzelnen Transportmittel jederzeit möglich ist, sowie eine Transportvorrichtung zur Durchführung des Verfahrens anzugeben.

Die Aufgabe wird durch die Merkmale der Ansprüche 1 und 11 gelöst.

Das erfindungsgemässe Verfahren geht aus von einer Transportvorrichtung, welche eine Vielzahl von gleichartigen, in einer Transportrichtung hintereinander angeordneten Transportmitteln aufweist, welche Transportmittel jeweils mindestens ein zu transportierendes Produkt, insbesondere ein Produkt der Druckweiterverarbeitung, aufnehmen und entlang einer in sich geschlossenen Transportbahn zwischen an der Transportbahn angeordneten Stationen transportieren können. Zum Identifizieren der einzelnen Transportmittel werden ausgewählte Transportmittel herangezogen, deren Position mittels mittelbar oder unmittelbar an der Transportbahn angeordneter erster Sensoren beim Passieren der ersten Sensoren detektierbar ist und die über die Transportbahn verteilt angeordnet sind und die Transportbahn in einzelne Segmente unterteilen. Das erfindungsgemässe Verfahren zeichnet sich dadurch aus, dass allen Transportmitteln einzeln fortlaufende feste Ordnungsnummern zugeordnet werden, die von einem einzigen Startpunkt aus gezählt werden, und dass der Startpunkt durch eine spezielle Anordnung mehrerer detektierbarer Transportmittel festgelegt ist.

Eine Ausgestaltung des erfindungsgemässen Verfahrens ist dadurch gekennzeichnet, dass der Startpunkt durch mindestens zwei unmittelbar aufeinanderfolgende detektierbare Transportmittel festgelegt ist.

Insbesondere fällt dabei der Startpunkt mit dem zweiten der beiden, respektive dem letzten der mehreren aufeinanderfolgenden detektierbaren Transportmittel zusammen.

Eine andere Ausgestaltung des Verfahrens nach der Erfindung ist dadurch gekennzeichnet, dass die ausgewählten beziehungsweise detektierbaren Transportmittel entlang der Transportbahn gleichmässig verteilt angeordnet beziehungsweise die Segmente der Transportbahn gleich lang sind.
Eine weitere Ausgestaltung zeichnet sich dadurch aus, dass bei der Bewegung der Transportmittel entlang der Transportbahn mittels an der Transportbahn angeordneter zweiter Sensoren durch die Transportvorrichtung ein Taktsignal erzeugt wird, dessen Taktimpulse den Transportmitteln zugeordnet werden können, und dass die Taktimpulse zusätzlich zur Identifizierung der einzelnen Transportmittel herangezogen werden.
Insbesondere wird beim Passieren der ersten Sensoren durch die ausgewählten Transportmittel ein Referenzsignal erzeugt, dessen Referenzimpulse den ausgewählten Transportmitteln zugeordnet werden können. Die Zuordnung erfolgt eindeutig und die Referenzimpulse sind vorzugsweise mit ausgewählten Taktimpulsen korreliert sind.
Vorzugsweise liegen die Referenzimpulse und die dazu korrelierenden ausgewählten Taktimpulse jeweils symmetrisch zu einer gemeinsamen Mittellinie.

Eine andere Ausgestaltung ist dadurch gekennzeichnet, dass ein Abbild der Transportvorrichtung, vorzugsweise ein Taktabbild, verwendet wird, welches entsprechend den nummerierten Transportmitteln der Transportvorrichtung nummerierte Abteilungen umfasst, in welche ein Eintrag gemacht werden kann, respektive in dem ein Eintrag aktiviert werden kann, wenn das entsprechende Transportmittel ein zu transportierendes Produkt aufnimmt. Analog dazu kann ein Eintrag gelöscht, respektive inaktiviert werden, wenn das entsprechende Transportmittel ein transportiertes Produkt abgibt oder ein solches aus dem Transportmittel entnommen wird.

Eine Weiterbildung dieser Ausgestaltung zeichnet sich dadurch aus, dass die an der Transportbahn angeordneten Stationen auf das Abbild der Transportvorrichtung zugreifen und entsprechende Einträge vornehmen oder löschen, wenn sie ein Produkt in ein Transportmittel einführen oder aus einem Transportmittel entnehmen.

Eine noch andere Ausgestaltung des Verfahrens ist dadurch gekennzeichnet, dass die Transportvorrichtung ein Greifertransporteur ist, dass die Transportmittel jeweils einen Greifer zum lösbaren Halten eines Produktes umfassen, und dass die Greifer an einer Kette befestigt sind, welche zur Erzeugung eines Taktsignals herangezogen wird.

Die erfindungsgemässe Transportvorrichtung zur Durchführung des Verfahrens weist eine Vielzahl von gleichartigen, in einer Transportrichtung hintereinander angeordneten Transportmitteln auf, welche Transportmittel jeweils ein zu transportierendes Produkt, insbesondere ein Produkt der Druckweiterverarbeitung, aufnehmen und entlang einer in sich geschlossenen Transportbahn zwischen an der Transportbahn angeordneten Stationen transportieren können, wobei erste Sensoren an der Transportbahn angeordnet sind, welche entlang der Transportbahn verteilt angeordnete, ausgewählte Transportmittel beim Passieren detektieren können. Sie zeichnet sich dadurch aus, dass ein einziger ausgewählter Punkt in der Reihe der Transportmittel durch eine spezielle Anordnung mehrerer detektierbarer Transportmittel festgelegt ist.

Eine Ausgestaltung der erfindungsgemässen Transportvorrichtung ist dadurch gekennzeichnet, dass der ausgewählte Punkt durch zwei unmittelbar aufeinanderfolgende detektierbare Transportmittel festgelegt ist.

Gemäss einer anderen Ausgestaltung weisen die ausgewählten Transportmittel jeweils mindestens einen Signalgeber, zum Beispiel eine Schaltfahne auf, mit welchem sie während des Betriebs der Transportvorrichtung an den ersten Sensoren vorbei bewegt werden. Die Signalgeber können in Form von aktiven oder passiven Signalgebern ausgebildet sein, die mittels optischer, induktiver, kapazitiver und weiterer Sensoren detektierbar sind. Ausser der vorgenannten Schaltfahne kann ein Signalgeber auch als optisch erfassbare Markierung, als optisch erfassbarer Barcode, als Reflektor oder als passives RFID-Tag ausgebildet sein. Gemäss einer Ausführungsform sind die Signalgeber wiederbeschreibbare RFID-Tags, die bei einem Auswechseln, einem Zufügen oder Entfernen von einzelnen Transportmitteln einfach neu mit der nötigen Signalinformation beschrieben werden können.

Anhand der vorliegenden Offenbarung ist es für den Fachmann gut nachvollziehbar, dass in der Transportvorrichtung alle Transportmittel als detektierbaren Transportmittel ausgebildet sind und der einzige ausgewählte Punkt in der Reihe der Transportmittel durch eine spezielle Anordnung mehrerer nichtdetektierbarer Transportmittel festgelegt ist. Anstelle eines vorgängig beschriebenen Signals wird die gewünschte Information in diesem Fall durch das Ausbleiben eines zu erwartenden Signals erzeugt.
Gemäss einer weiteren Ausführungsform sind alle Transportmittel mit einem aktivierbaren/deaktivierbaren Signalgeber, zum Beispiel einem wiederbeschreibbaren RFID-Tag versehen. Anstelle von körperlich ausgebildeten Signalgebern wie einer Schaltfahne, oder einer Strichmarkierung übernehmen einzelne RFIDs von einzelnen Transportmitteln die Funktion der Signalgeber in dem sie mit einer entsprechenden auslesbaren Signalgeber-Information beschrieben sind. Die übrigen RFID-Tags sind nicht derart beschrieben und werden vom System nicht als mit einem Signalgeber markierte Transportmittel erkannt. Zusätzlich zur und unabhängig von der Signalgeber-Infomation lassen sich noch andere Informationen auf dem RFID-Tag abspeichern.

Eine weitere Ausgestaltung der Transportvorrichtung ist dadurch gekennzeichnet, dass die Transportmittel an einer Kette befestigt sind, und dass zweite Sensoren zum Abtasten der einzelnen Glieder der Kette im Bereich der Kette angeordnet sind.

Eine weitere Ausgestaltung der Transportvorrichtung ist dadurch gekennzeichnet, dass die Transportmittel jeweils einen Greifer zum lösbaren Halten eines Produktes umfassen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Seitenansicht einen kurzen Abschnitt einer Transportvorrichtung in Form eines Greifertransporteurs gemäss einem Ausführungsbeispiel der Erfindung;
- Fig. 2: eine Schnittdarstellung der Transportvorrichtung aus Fig. 1 in der Schnittebene II-II;
- Fig. 3: eine perspektivische Seitenansicht des Abschnitts aus Fig. 1;
- Fig. 4: die zeitliche Korrelation von Taktsignalen und Referenzsignal eines ausgewählten Transportmittels gemäss einem Ausführungsbeispiel der Erfindung;
- Fig. 5: die zeitliche Korrelation von Taktsignalen und Referenzsignalen der den Startpunkt definierenden mehreren ausgewählten Transportmittel gemäss einem Ausführungsbeispiel der Erfindung;
- Fig. 6: in einer schematischen Darstellung die Segmentierung mit einem einzelnen Startpunkt einer Transportbahn gemäss einem Ausführungsbeispiel der Erfindung; und
- Fig. 7: die schematische Darstellung eines Kettenabbildes, wie es bei einem Ausführungsbeispiel der Erfindung eingesetzt wird.

### WEGE ZUR AUSFÜHRUNG DER ERFINDUNG

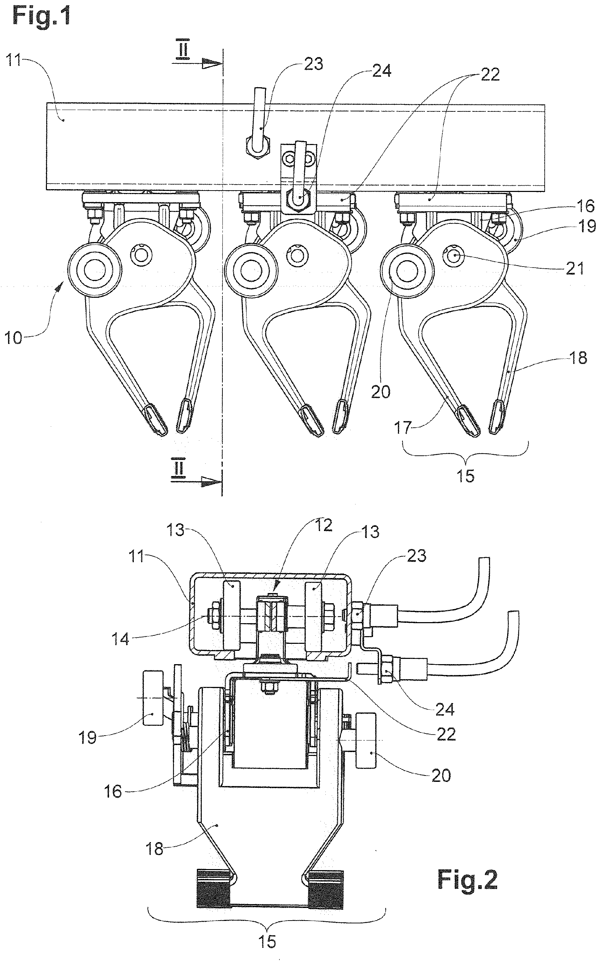

Fig. 1 zeigt in einer Seitenansicht einen kurzen Abschnitt einer Transportvorrichtung in Form eines Greifertransporteurs gemäss einem Ausführungsbeispiel der Erfindung. Der Greifertransporteur 10 weist eine Kette 12 auf, die aus einzelnen Gliedern zusammengesetzt ist, die jeweils ein Paar voneinander beabstandete Laufräder 13 mit einer gemeinsamen Achse 14 umfassen. Die Kette 12 läuft in einer Kettenführung 11 mit rechteckigem Querschnitt, die im Bereich zwischen den Laufrädern 13 nach unten offen ist. An den Kettengliedern ist jeweils ausserhalb der Kettenführung 11 ein U-förmiger Tragbügel 16 befestigt, an dem ein an sich bekannter Greifer 15 aufgehängt ist (siehe z.B. die EP 2 172 407 A2).

Greifer 15 umfasst zwei Greiferschenkel 17 und 18, die gegeneinander um eine Greiferachse 21 so verschwenkbar sind, dass sie ein flächiges Druckprodukt nach unten hängend greifen und halten können. Den Greiferschenkeln 17 und 18 sind entsprechende Steuerrollen 19 und 20 zugeordnet, die durch ein Zusammenwirken mit entsprechenden (nicht gezeigten) Steuerkulissen ein Öffnen und Schliessen des Greifers 15 ermöglichen.

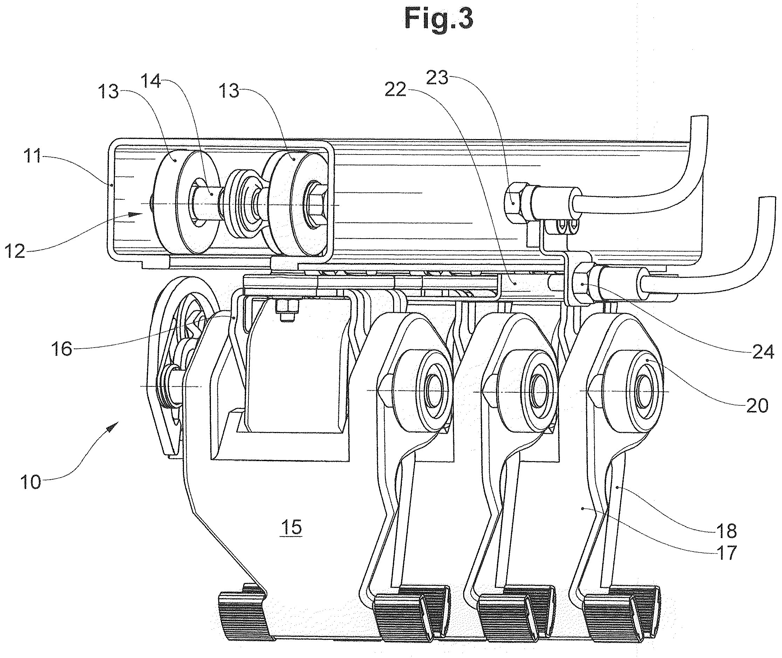

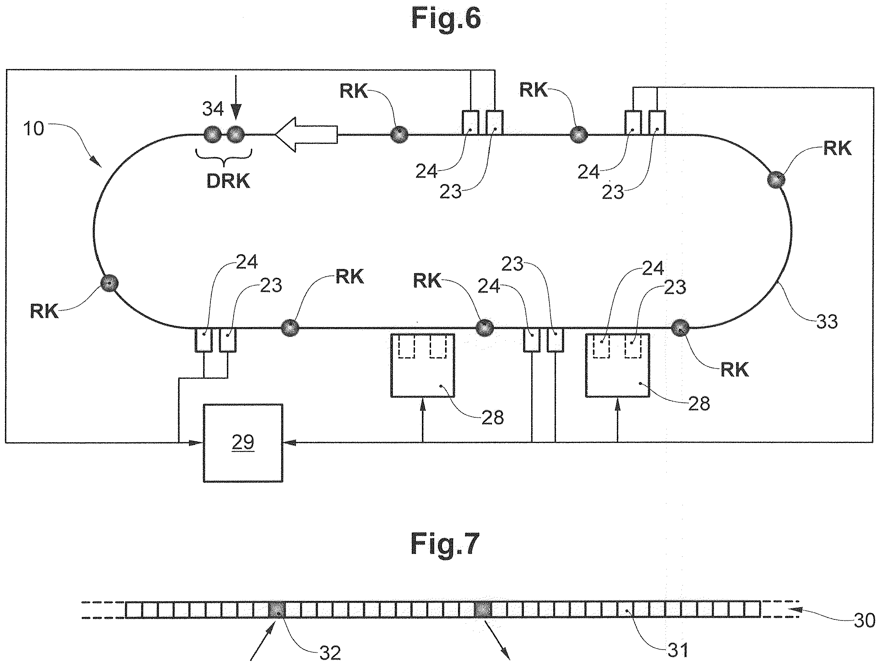

Der in Fig. 1-3 dargestellte Abschnitt ist Teil einer im Regelfall wesentlich längeren, in sich geschlossenen Transportbahn, die in Fig. 6 schematisch als einfaches Oval mit dem Bezugszeichen 33 dargestellt ist. Es versteht sich von selbst, dass eine solche Transportbahn 33 durch grosse Hallen führen kann und dann Tausende von Greifern 15 an entsprechenden Kettengliedern umfassen kann. An ausgewählten Stellen einer solchen Transportbahn 33 sind gemäss Fig. 1-3 Paare von Sensoren 23 und 24 fest angeordnet, die bestimmte Signale erzeugen, wenn sich die Kette 12 mit den daran befestigten Greifern 15 an ihnen vorbei bewegt.

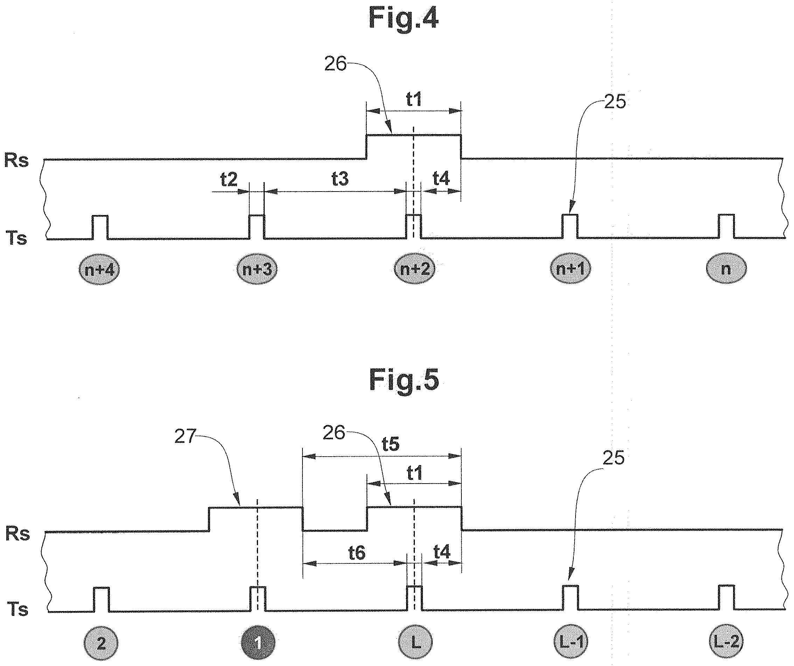

Ein erster Sensor 23 ist seitlich auf Höhe der Achsen 14 der Kette 12 (siehe Fig. 2) an der Kettenführung 11 angeordnet, und gibt ein impulsförmiges Taktsignal Ts (siehe Fig. 4 und Fig. 5) ab, dass aus einzelnen Taktimpulsen 25 besteht, die jeweils den Durchlauf einer Achse 14 am Sensor 23 signalisieren. Da üblicherweise die Achsen 14 der Kette 12 einen konstanten Abstand voneinander haben, ist die Zeitspanne (t3 in Fig. 4) zwischen aufeinanderfolgenden Taktimpulsen 25 konstant, sofern die Geschwindigkeit der Kette 12 konstant ist. In jedem Fall wird für jeden Greifer 15, die das Sensorpaar 23, 24 passiert, ein Taktimpuls 25 abgegeben.

Ein zweiter Sensor 24 ist schräg unterhalb des ersten Sensors 23 so an der Kettenführung 11 angebracht, dass er mit dem Sensorkopf in den Raum unterhalb der Kettenführung 11 gerichtet ist. Der zweite Sensor 24 spricht auf einzelne Greifer 15 an, die - wie die beiden rechten Greifer im Beispiel der Fig. 1 - mit entsprechenden, am Tragbügel 16 angebrachten und seitlich herausstehenden Schaltfahnen 22 ausgerüstet sind. Wird ein solcher mit einer Schaltfahne 22 ausgestatteter Greifer 15 an dem zweiten Sensor 24 vorbeigeführt, gibt der zweite Sensor 24 ein Referenzsignal Rs (siehe Fig. 4 und Fig. 5) ab. Das Referenzsignal Rs umfasst entweder einzelne Referenzimpulse 26 (wenn nur eine einzelne, mit einer Schaltfahne 22 ausgerüsteter Greifer 15 am Sensor vorbeigeführt wird; siehe Fig. 4) oder einen aus zwei unmittelbar aufeinanderfolgenden Referenzimpulsen 26 und 27 bestehenden Doppelpuls (wenn, wie in Fig. 1 dargestellt, zwei unmittelbar aufeinanderfolgende Greifer 15 mit je einer Schaltfahne 22 ausgerüstet sind; siehe Fig. 5).

Ausgestaltung und Anordnung der Sensoren 23 und 24, der Schaltfahnen 22 und der Kette 12 mit ihren Achsen 14 sind derart, dass die Referenzimpulse 26 und 27 eine Zeitdauer t1 haben, die deutlich länger ist als die Zeitdauer t2 der Taktimpulse 25, und dass ein Referenzimpuls 26, 27 und sein zugeordneter Taktimpuls 25 - wie aus Fig. 4 und Fig. 5 leicht zu ersehen ist - symmetrisch zu einer gemeinsamen Mittelachse (gestrichelt) liegen (Für die einzelnen eingezeichneten Zeitdauern gilt t1 = t2 + 2(t4); t3 = t5 = t4 + t6).

Gemäss Fig. 6 sind nun über die gesamte Länge der Kette 12 (beziehungsweise Transportbahn 33) einzelne, mit einer entsprechenden Schaltfahne 22 versehene Referenzgreifer RK gleichmässig verteilt innerhalb der Kette 12 angeordnet und unterteilen die Kette 12 (beziehungsweise die Transportbahn 33) in gleich lange Segmente. Die Referenzgreifer RK erzeugen beim Betrieb der Transportvorrichtung einzelne Referenzimpulse 26 gemäss Fig. 4. Der Abstand zwischen zwei Referenzgreifern RK beträgt beispielsweise 100 bis 200 Greifer, was einem Abstand von etwa 10-20 m entspricht. Über eine solche Segmentlänge gesehen spielt der sogenannte "Jitter", das heisst die vom Spiel der einzelnen Kettenglieder zueinander bewirkte Längenveränderung und dadurch bewirkte additive Positionsungenauigkeit der Transportmittel zueinander, keine Rolle. Der Jitter macht sich als relative Verkürzung der Kette beim Abbremsen im abgebremsten Abschnitt und als entsprechende Verlängerung der Kette beim Ziehen im gezogenen Abschnitt der Kette bemerkbar.

An einer ausgewählten Stelle der Kette 12 ist eine Doppelreferenzgreifer DRK gemäss Fig. 1 angeordnet, bei der zwei unmittelbar aufeinanderfolgende Greifer 15 jeweils mit einer Schaltfahne 22 ausgestattet sind. Die Doppelreferenzgreifer DRK erzeugt beim Betrieb der Transportvorrichtung einen doppelten Referenzimpuls 26, 27 gemäss Fig. 5. Grundsätzlich ist es aber auch denkbar, die zwei Greifer mit einer Lücke dazwischen anzuordnen oder drei oder mehr Greifer mit Schaltfahne in einer Art "codierten" Anordnung vorzusehen.

Die Doppelreferenzgreifer DRK beziehungsweise der zugehörige Doppelimpuls (oder eine andere "codierte" Anordnung) legen einen Startpunkt 34 fest, von dem aus durch einfache Zählung aller Greifer 15 der Transportvorrichtung mit 1 beginnend eine fortlaufende, eindeutige Ordnungsnummer (1, 2, 3,....L-2, L-1, L in Fig. 5; L = Gesamtzahl der Greifer) zugeordnet werden kann. Startpunkt 34 ist dabei der zweite Impuls 27 des Doppelimpulses 26, 27.

Sind nun an der Transportbahn 33 gemäss Fig. 6 mehrere Transferstationen 28 angeordnet, die den Greifern 15 Produkte zuführen oder entnehmen, oder in den Greifern 15 gehaltene Produkte bearbeiten, können die Transferstationen 28 mithilfe von ihnen zugeordneten ersten und zweiten Sensoren 23 beziehungsweise 24 sowohl Taktsignal Ts als auch Referenzsignal Rs erkennen.

Nach der Startphase der Transportvorrichtung 10 können die Transferstationen 28, weil ihre Fix-Positionen und die eingeteilten Segmentlängen der Kette 12 bekannt und vorzugsweise gleich sind, die gewünschte Greifernummer berechnen, sobald eine Transferstation 28 einen einzelnen Referenzgreifer RK erkennt (Referenzimpuls 26 in Fig. 4).

Es ist aber auch denkbar, ausserhalb der Transferstationen 28 zusätzliche Paare von Sensoren 23, 24 anzuordnen und mit einer entsprechenden zentralen Steuerung 29 zu verbinden (Fig. 6).

Aufgrund der Durchnummerierung der Greifer 15 der Transportvorrichtung 10 kann in der Steuerung 29 ein Kettenabbild 30 mit einer fortlaufenden Reihe von (symbolischen) Kästchen 31 hinterlegt werden (siehe Fig. 7), in dem jedem Greifer 15 ein Kästchen 31 zugeordnet ist. Wird ein Greifer 15 mit einem Produkt belegt, wird im Kettenabbild 30 in den zugehörigen Kästchen ein Eintrag vorgenommen, respektive aktiviert (Produkteintrag 32; schattiert dargestellt). Der Eintrag wird wieder entfernt oder inaktiviert, wenn dem Greifer 15 das Produkt entnommen wird, respektive dieser das Produkt abgibt. Damit das Kettenabbild 30 immer den jeweiligen Zustand der Greiferbelegung widerspiegelt, können die Transferstationen 28 auf dieses Kettenabbild 30 zugreifen.

### LISTE DER BEZUGSZEICHEN

- 10: Greifertransporteur
- 11: Kettenführung
- 12: Kette
- 13: Laufrad
- 14: Achse
- 15: Greifer
- 16: Tragbügel
- 17,18: Greiferschenkel
- 19,20: Steuerrolle
- 21: Greiferachse
- 22: Schaltfahne
- 23,24: Sensor
- 25: Taktimpuls
- 26,27: Referenzimpuls
- 28: Transferstation
- 29: Steuerung
- 30: Kettenabbild
- 31: Kästchen
- 32: Produkteintrag
- 33: Transportbahn
- 34: Startpunkt
- t1-t6: Zeitspanne, Zeitdauer
- RK: Referenzgreifer
- DRK: Doppelreferenzgreifer
- Ts: Taktsignal
- Rs: Referenzsignal

## Patentansprüche

1. Verfahren zum Betrieb einer Transportvorrichtung (10), welche eine Vielzahl von gleichartigen, in einer Transportrichtung hintereinander angeordneten Transportmitteln (15) aufweist, die jeweils mindestens ein zu transportierendes Produkt, insbesondere ein Produkt der Druckweiterverarbeitung, aufnehmen und entlang einer in sich geschlossenen Transportbahn (33) zwischen an der Transportbahn (33) angeordneten Stationen (28) transportieren können, bei welchem Verfahren zum Identifizieren der einzelnen Transportmittel (15) ausgewählte Transportmittel (RK) herangezogen werden, deren Position mittels an der Transportbahn (33) angeordneter erster Sensoren (24) beim Passieren der ersten Sensoren (24) detektierbar ist und die über die Transportbahn (33) verteilt angeordnet sind und die Transportbahn (33) in einzelne Segmente unterteilen, **dadurch gekennzeichnet, dass** allen Transportmitteln (15) einzeln fortlaufende feste Ordnungsnummern zugeordnet werden, die von einem einzigen Startpunkt (34) aus gezählt werden, und dass der Startpunkt (34) durch eine spezielle Anordnung mehrerer detektierbarer Transportmittel (DRK) festgelegt ist.

2. Verfahren nach Anspruch 1, **dadurch gekennzeichnet, dass** der Startpunkt (34) durch mindestens zwei unmittelbar aufeinanderfolgende detektierbare Transportmittel (DRK) festgelegt ist.

3. Verfahren nach Anspruch 2, **dadurch gekennzeichnet, dass** der Startpunkt (34) mit dem zweiten der beiden aufeinanderfolgenden oder dem letzten der mehreren detektierbaren Transportmittel (DRK) zusammenfällt.

4. Verfahren nach einem der Ansprüche 1-3, **dadurch gekennzeichnet, dass** bei der Bewegung der Transportmittel (15) entlang der Transportbahn (33) mittels an der Transportbahn (33) angeordneter zweiter Sensoren (23) durch die Transportvorrichtung (10) ein Taktsignal (Ts) erzeugt wird, dessen Taktimpulse (25) den Transportmitteln (15) zugeordnet werden können, und dass die Taktimpulse (25) zusätzlich zur Identifizierung der einzelnen Transportmittel (15) herangezogen werden.

5. Verfahren nach Anspruch 4, **dadurch gekennzeichnet, dass** beim Passieren der ersten Sensoren (24) durch die ausgewählten Transportmittel (RK; DRK) ein Referenzsignal (Rs) erzeugt wird, dessen Referenzimpulse (26, 27) den ausgewählten Transportmitteln (RK; DRK) zugeordnet werden können, und dass die Referenzimpulse (26, 27) mit ausgewählten Taktimpulsen (25) korreliert sind.

6. Verfahren nach Anspruch 5, **dadurch gekennzeichnet, dass** die Referenzimpulse (26, 27) und die dazu korrelierenden ausgewählten Taktimpulse (25) jeweils symmetrisch zu einer gemeinsamen Mittellinie liegen.

7. Verfahren nach einem der Ansprüche 1-6, **dadurch gekennzeichnet, dass** ein Taktabbild (30) der Transportvorrichtung (10) verwendet wird, welches entsprechend den nummerierten Transportmitteln (15) der Transportvorrichtung (10) nummerierte Abteilungen umfasst, in welchen ein Eintrag aktiviert wird, wenn das entsprechende Transportmittel (15) ein zu transportierendes Produkt aufnimmt, und in welchen ein Eintrag inaktiviert wird, wenn das entsprechende Transportmittel (15) ein transportiertes Produkt abgibt.

8. Verfahren nach Anspruch 7, **dadurch gekennzeichnet, dass** die an der Transportbahn (33) angeordneten Stationen (28) auf das Abbild (30) der Transportvorrichtung (10) zugreifen und entsprechende Einträge aktivieren oder inaktivieren, wenn sie ein Produkt in ein Transportmittel (15) einführen oder aus einem Transportmittel (15) entnehmen.

9. Verfahren nach einem der Ansprüche 1-8, **dadurch gekennzeichnet, dass** die Transportvorrichtung ein Greifertransporteur (10) ist, dass die Transportmittel jeweils einen Greifer (15) zum lösbaren Halten eines Produktes umfassen, und dass die Greifer (15) an einer Kette (12) befestigt sind, welche zur Erzeugung eines Taktsignals (Ts) herangezogen wird.

10. Verfahren nach einem der Ansprüche 1-3, **dadurch gekennzeichnet, dass** die ausgewählten beziehungsweise detektierbaren Transportmittel (RK) entlang der Transportbahn (33) gleichmässig verteilt angeordnet beziehungsweise die Segmente der Transportbahn (33) gleich lang sind.

11. Transportvorrichtung (10) zur Durchführung des Verfahrens nach einem der Ansprüche 1-10, welche Transportvorrichtung (10) eine Vielzahl von gleichartigen, in einer Transportrichtung hintereinander angeordneten Transportmitteln (15) aufweist, welche Transportmittel (15) jeweils ein zu transportierendes Produkt, insbesondere ein Produkt der Druckweiterverarbeitung, aufnehmen und entlang einer in sich geschlossenen Transportbahn (33) zwischen an der Transportbahn (33) angeordneten Stationen (28) transportieren können, wobei erste Sensoren (24) an der Transportbahn (33) angeordnet sind, welche entlang der Transportbahn (33) verteilt angeordnete, ausgewählte Transportmittel (RK) beim Passieren detektieren können, **dadurch gekennzeichnet, dass** ein einziger ausgewählter Punkt (34) in der Reihe der Transportmittel (15) durch eine spezielle Anordnung mehrerer detektierbarer Transportmittel (DRK) festgelegt ist.

12. Transportvorrichtung nach Anspruch 11, **dadurch gekennzeichnet, dass** der ausgewählte Punkt (34) durch mindestens zwei unmittelbar aufeinanderfolgende detektierbare Transportmittel (DRK) festgelegt ist.

13. Transportvorrichtung nach Anspruch 11 oder 12, **dadurch gekennzeichnet, dass** die ausgewählten Transportmittel (RK) jeweils einen Signalgeber, vorzugsweise eine Schaltfahne (22) aufweisen, welcher während des Betriebs der Transportvorrichtung an den ersten Sensoren (24) vorbei bewegt wird.

14. Transportvorrichtung nach einem der Ansprüche 11-13, **dadurch gekennzeichnet, dass** die Transportmittel (15) an einer Kette (12) befestigt sind, und dass zweite Sensoren (23) zum Abtasten der einzelnen Glieder der Kette (12) im Bereich der Kette (12) angeordnet sind.

15. Transportvorrichtung nach einem der Ansprüche 11-14, **dadurch gekennzeichnet, dass** die Transportmittel (15) als Greifer ausgebildet sind, und dass zweite Sensoren zum Abtasten der einzelnen Greifer im Bereich der Greifer angeordnet sind.

## Claims

1. A method for operating a transport device (10) comprising a plurality of identical transport means (15) arranged one after another in a transport direction, which transport means in each case are able to pick up at least one product to be transported, in particular a product in post press processing, and are able to transport it along an intrinsically closed transport path (33) between stations (28) arranged on the transport path (33), in which method, in order to identify the individual transport means (15), selected transport means (RK) are used, the position of which can be detected by means of first sensors (24) arranged on the transport path (33) as they pass the first sensors (24) and which are arranged distributed over the transport path (33) and which divide the transport path (33) into individual segments, **characterized in that** all the transport means (15) are assigned individually consecutive fixed serial numbers, which are counted from a single starting point (34), and **in that** a starting point (34) is defined by a specific arrangement of a plurality of detectable transport means (DRK).

2. The method according to claim 1, **characterized in that** the starting point (34) is defined by at least two directly successive detectable transport means (DRK).

3. The method according to claim 2, **characterized in that** the starting point (34) coincides with the second of the two successive or the last of the plurality of detectable transport means (DRK).

4. The method according to any one of claims 1-3, **characterized in that** as the transport means (15) move along the transport path (33), a clock signal (Ts) is generated by means of second sensors (23) arranged on the transport path (33) through the transport device (10), the clock pulses (25) of which can be assigned to the transport means (15) and that the clock pulses (25) are additionally used to identify the individual transport means (15).

5. The method according to claim 4, **characterized in that** as the first sensors (24) pass through the selected transport means (RK; DRK) a reference signal (Rs) is generated, the reference pulses (26, 27) of which can be assigned to the selected transport means (RK; DRK), and **in that** the reference pulses (26, 27) are correlated with selected clock pulses (25).

6. The method according to claim 5, **characterized in that** the reference pulses (26, 27) and the selected clock pulses (25) correlated therewith are in each case located symmetrically with respect to a common centre line.

7. The method according to any one of claims 1-6, **characterized in that** a clock cycle map (30) of the transport device (10) is used, which comprises compartments numbered in accordance with the numbered transport means (15) of the transport device (10), in which an entry is activated when the corresponding transport means (15) picks up a product to be transported, and in which an entry is inactivated when the corresponding transport means (15) delivers a transported product.

8. The method according to claim 7, **characterized in that** the stations (28) arranged on the transport path (33) access the clock cycle map (30) of the transport device (10) and activate or inactivate corresponding entries when they introduce a product into a transport means (15) or remove it from a transport means (15).

9. The method according to any one of claims 1-8, **characterized in that** the transport device is a gripper transporter (10), **in that** the transport means in each case comprise a gripper (15) to hold a product detachably, and **in that** the grippers (15) are fixed to a chain (12) which is used to generate a clock signal (Ts) .

10. The method according to any one of claims 1-3, **characterized in that** the selected or detectable transport means (RK) are arranged distributed uniformly along the transport path (33) or the segments of the transport path (33) are equally long.

11. A transport device (1) for implementing the method according to any one of claims 1-10, which transport device (10) has a multiplicity of identical transport means (15) arranged one after another in a transport direction, which transport means (15) in each case are able to pick up a product to be transported, in particular a product in post press processing, and are able to transport it along an intrinsically closed transport path (33) between stations (28) arranged on the transport path (33), wherein first sensors (24) are arranged on the transport path (33), which are able to detect selected transport means (RK) arranged distributed along the transport path (33) as they pass, **characterized in that** a single selected point (34) in the series of transport means (15) is defined by a special arrangement of a plurality of detectable transport means (DRK).

12. The transport device according to claim 11, **characterized in that** the selected point (34) is defined by at least two directly successive detectable transport means (DRK).

13. The transport device according to claim 11 or 12, **characterized in that** the selected transport means (RK) each have a signal generator, preferably a cam switch (22), which is moved past the first sensors (24) during the operation of the transport device.

14. The transport device according to any one of claims 11-13, **characterized in that** the transport means (15) are fixed to a chain (12), and **in that** second sensors (23) for sensing the individual links of the chain (12) are arranged in the region of the chain (12).

15. The transport device according to any one of claims 11-14, **characterized in that** the transport means (15) are designed as grippers, and **in that** second sensors for sensing the individual grippers are arranged in the region of the grippers.

## Revendications

1. Procédé pour faire fonctionner un dispositif de transport (10), lequel comporte une pluralité de moyens de transport (15) identiques disposés l'un derrière l'autre dans un dispositif de transport, qui reçoivent et peuvent transporter respectivement le long d'une voie de transport (33) fermée sur elle-même entre des postes (28) disposés sur la voie de transport (33) au moins un produit à transporter, notamment un produit destiné à la transformation sous pression, procédé pour lequel on fait appel pour identifier les moyens de transport (15) individuels à des moyens de transport sélectionnés (RK), dont la position peut être détectée au moyen de premiers capteurs (24) disposés sur la voie de transport (33) lors du passage aux premiers capteurs (24) et qui sont disposés répartis sur la voie de transport (33) et qui subdivisent la voie de transport (33) en segments individuels, **caractérisé en ce que** des numéros d'ordre fixes individuellement successifs sont attribués à tous les moyens de transport (15), qui sont numérotés à partir d'un point de départ (34) unique et **en ce que** le point de départ (34) est défini par une configuration spéciale de plusieurs moyens de transport (DRK) détectables.

2. Procédé selon la revendication 1, **caractérisé en ce que** le point de départ (34) est défini par au moins deux moyens de transport (DRK) détectables directement successifs.

3. Procédé selon la revendication 2, **caractérisé en ce que** le point de départ (34) coïncide avec le deuxième des deux moyens de transport (DRK) successifs ou le dernier des nombreux moyens de transport détectables.

4. Procédé selon l'une quelconque des revendications 1-3, **caractérisé en ce que** lors du déplacement des moyens de transport (15) le long de la voie de transport (33) au moyen des deuxièmes capteurs (23) disposés sur la voie de transport (33) un signal de synchronisation (Ts) est produit par le dispositif de transport (10) dont les impulsions de synchronisation (25) peuvent être attribuées aux moyens de transport (15) et **en ce que** les impulsions de synchronisation (25) sont en plus utilisées pour identifier les moyens de transport (15) individuels.

5. Procédé selon la revendication 4, **caractérisé en ce que** lorsque les moyens de transport (RK ;DRK) sélectionnés passent par les premiers capteurs (24), un signal de référence (Rs) est produit dont les impulsions de référence (26, 27) peuvent être attribuées aux moyens de transport (RK ;DRK) sélectionnés et **en ce que** les impulsions de référence (26, 27) sont en corrélation avec les impulsions de synchronisation (25) sélectionnées.

6. Procédé selon la revendication 5, **caractérisé en ce que** les impulsions de référence (26, 27) et les impulsions de synchronisation (25) sélectionnées en corrélation à cet effet se situent respectivement de manière symétrique par rapport à une ligne médiane commune.

7. Procédé selon l'une quelconque des revendications 1-6, **caractérisé en ce qu'**une représentation de synchronisation (30) du dispositif de transport (10) est utilisée, laquelle comprend selon les moyens de transport (15) numérotés du dispositif de transport (10), des séparations numérotées dans lesquelles un enregistrement est activé, lorsque le moyen de transport (15) correspondant reçoit un produit à transporter et dans lesquelles un enregistrement est désactivé, lorsque le moyen de transport (15) correspondant délivre un produit à transporter.

8. Procédé selon la revendication 7, **caractérisé en ce que** les postes (28) disposés sur la voie de transport (33) accèdent à la représentation (30) du dispositif de transport (10) et activent ou désactivent des enregistrements correspondants, lorsqu'ils introduisent un produit dans un moyen de transport (15) ou le prélèvent d'un moyen de transport (15).

9. Procédé selon l'une quelconque des revendications 1-8, **caractérisé en ce que** le dispositif de transport est un transporteur à grappins (10), **en ce que** les moyens de transport comprennent respectivement un grappin (15) pour le maintien amovible d'un produit et **en ce que** les grappins (15) sont fixés sur une chaîne (12), laquelle est utilisée pour produire un signal de synchronisation (Ts) .

10. Procédé selon l'une quelconque des revendications 1-3, **caractérisé en ce que** les moyens de transport (RK) sélectionnés ou détectables sont disposés répartis uniformément le long de la voie de transport (33) ou les segments de la voie de transport (33) sont de longueur identique.

11. Dispositif de transport (10) destiné à l'exécution d'un procédé selon l'une quelconque des revendications 1-10, lequel dispositif de transport (10) comporte une pluralité de moyens de transport (15) identiques disposés les uns derrière les autres dans un dispositif de transport, lesquels moyens de transport (15) reçoivent et peuvent transporter respectivement le long d'une voie de transport (33) fermée sur elle-même entre des postes (28) disposés sur la voie de transport (33) un produit à transporter, notamment un produit destiné à la transformation sous pression, des premiers capteurs (24) étant disposés sur la voie de transport (33), lesquels peuvent détecter lors du passage les moyens de transport (RK) sélectionnés, disposés de manière répartie le long de la voie de transport (33) **caractérisé en ce qu'**un point (34) sélectionné unique dans la série des moyens de transport (15) est défini par une configuration spéciale de plusieurs moyens de transports (DRK) détectables.

12. Dispositif de transport selon la revendication 11, **caractérisé en ce que** le point sélectionné (34) est défini par au moins deux moyens de transport (DRK) détectables directement successifs.

13. Dispositif de transport selon la revendication 11 ou 12, **caractérisé en ce que** les moyens de transport (RK) sélectionnés comportent respectivement un transmetteur de signaux, de préférence une plaque de commutation (22), lequel est déplacé en passant le long des premiers capteurs (24) pendant le fonctionnement du dispositif de transport.

14. Dispositif de transport selon l'une quelconque des revendications 11-13, **caractérisé en ce que** les moyens de transport (15) sont fixés sur une chaîne (12) et **en ce que** les deuxièmes capteurs (23) sont disposés dans la zone de la chaîne (12) pour balayer chaque organe de la chaîne (12).

15. Dispositif de transport selon l'une quelconque des revendications 11-14, **caractérisé en ce que** les moyens de transport (15) sont constitués sous la forme de grappins et **en ce que** les deuxièmes capteurs sont disposés dans la zone des grappins pour balayer chaque grappin.
